# EUROPEAN PATENT APPLICATION

(11) **EP 4 516 971 A1**
(43) Date of publication of application: **05.03.2025**
(21) Application number: 23796554.6
(22) Date of filing: 28.04.2023
(51) Int. Cl.: C25D 5/26, C25D 3/12, C25D 5/50

(54) **METHOD FOR PRODUCING ROLLED SURFACE-TREATED STEEL SHEET, AND ROLLED SURFACE-TREATED STEEL SHEET**

(30) Priority: 29.04.2022 JP 2022075592
(71) Applicant: Toyo Kohan Co., Ltd., Tokyo 141-8260 (JP)
(72) Inventor: IRIE, Tsuyoshi, Kudamatsu-shi Yamaguchi 744-8611 (JP); YOSHIOKA, Koh, Kudamatsu-shi Yamaguchi 744-8611 (JP); TAKEUCHI, Takaki, Kudamatsu-shi Yamaguchi 744-8611 (JP); TOYAMA, Junya, Kudamatsu-shi Yamaguchi 744-8611 (JP); UENO, Misato, Kudamatsu-shi Yamaguchi 744-8611 (JP)
(74) Representative: Hoffmann Eitle
(86) International application number: PCT/JP2023/016948
(87) International publication number: WO 2023/210822

(57) **Abstract**

To suppress the occurrence of cracks even in a state where elongation is applied while the hardness of the surface of a rolled surface-treated steel sheet is maintained and to improve a sheet passing property when passing through squeezing rolls and sheet passing rolls.

[Solving Means]

Provided is a manufacturing method of a rolled surface-treated steel sheet including an iron-nickel alloy layer formation step in which an iron-nickel alloy layer is formed on a steel sheet to be a base material, and a rolling step in which, after the iron-nickel alloy layer formation step, the steel sheet having the iron-nickel alloy layer is rolled at a rolling reduction of 5% to 25%.

## Description

### [Technical Field]

The present invention relates to a manufacturing method of a rolled surface-treated steel sheet and a rolled surface-treated steel sheet.

### [Background Art]

Nickel plating steel foil has been known from the past as a material for a member configuring a battery and a member configuring an electronics-related apparatus. In such nickel plating steel foil, a method in which a diffusion alloy layer containing nickel and iron is formed on a steel sheet for such reasons as improving corrosion resistance with a small amount of Ni, and a nickel plating steel sheet is cold-rolled at a high rolling reduction for the purpose of, for example, controlling the texture of the diffusion alloy layer, to obtain nickel plating steel foil is adopted.

PTL 1 discloses a manufacturing method of steel foil having a thickness of 100 µm or less and a specific texture formed on the surface layer by annealing a steel sheet having nickel plating to mutually diffuse Ni in the plating and Fe in the steel sheet and then by performing cold rolling under a condition of a cumulative rolling reduction of 70% or more.

### [Citation List]

### [Patent Literature]

[PTL 1] PCT Patent Publication No. WO2013/157600

### [Summary]

### [Technical Problems]

The steel foil obtained by not only the above-described manufacturing method but also a conventional manufacturing method had the following problems. That is, there has been a concern that, under a situation in which repeated elongation is applied such as charging and discharging of a current collector of a secondary battery, a plating layer portion is cracked by the elongation, and iron to be a base material is exposed and flow out into a highly corrosive, alkaline electrolytic solution, for example. Further, in the case where a secondary battery or an electronics-related apparatus is assembled, foil is allowed to pass through sheet passing rolls a plurality of times in a manufacturing line, and there has been a demand for steel foil for which scratching of the surface of the foil can be restrained at that time.

The present invention has been made in view of solving such problems, and an object thereof is to provide a manufacturing method of a rolled surface-treated steel sheet in which the occurrence of cracks is suppressed even in a state where elongation is applied while the hardness of the surface is maintained and a sheet passing property when passing through squeezing rolls and sheet passing rolls is improved.

### [Solution to Problems]

(1) In order to solve the above problems, a manufacturing method of a rolled surface-treated steel sheet in the present embodiment includes an iron-nickel alloy layer formation step in which an iron-nickel alloy layer is formed on a steel sheet to be a base material, and a rolling step in which, after the iron-nickel alloy layer formation step, the steel sheet having the iron-nickel alloy layer is rolled at a rolling reduction of 5% to 25%.
(2) In (1) above, it is preferable that the iron-nickel alloy layer formation step include a nickel plating step in which a nickel plating layer is formed on the steel sheet to be a base material, and a heat treatment step in which a nickel plating material obtained in the nickel plating step is subjected to heat treatment to form the iron-nickel alloy layer by diffusion.
(3) Further, in order to solve the above problems, a rolled surface-treated steel sheet in the present embodiment has a base material made of steel and an iron-nickel alloy layer provided on the base material, the iron-nickel alloy layer contains Fe₁Ni₁, an orientation index of a (200) plane of the Fe₁Ni₁ in X-ray diffraction is 0.7 or more, and the orientation index of a (220) plane of the Fe₁Ni₁ in the X-ray diffraction is 0.7 or more but less than 2.5.
(4) In (3) above, it is preferable that an average crystal grain size of nickel obtained by electron backscatter diffraction (EBSD) measurement on the surface of the rolled surface-treated steel sheet be 0.4 to 1.1 µm.
(5) In (3) above, it is preferable that a difference (absolute value) between the orientation index of the (200) plane of the Fe₁Ni₁ in the X-ray diffraction and the orientation index of the (220) plane of the Fe₁Ni₁ in the X-ray diffraction be 1.0 or less.
(6) In (3) above, it is preferable that the orientation index of a (111) plane of the Fe₁Ni₁ in the X-ray diffraction be 0.3 to 2.0.

### [Advantageous Effect of Invention]

According to the present invention, it is possible to provide a manufacturing method of a rolled surface-treated steel sheet in which the occurrence of cracks is suppressed even in a state where elongation is applied while the hardness is maintained and a sheet passing property is improved.

### [Brief Description of Drawing]

[FIG. 1]

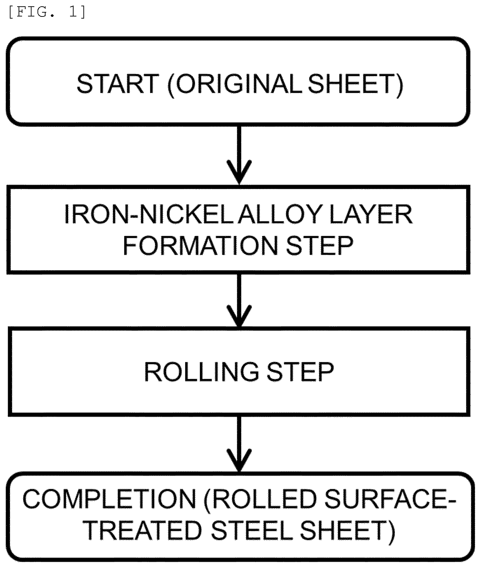

   FIG. 1 is a flowchart for depicting a manufacturing method of a rolled surface-treated steel sheet of the present embodiment.
[FIG. 2(a)]

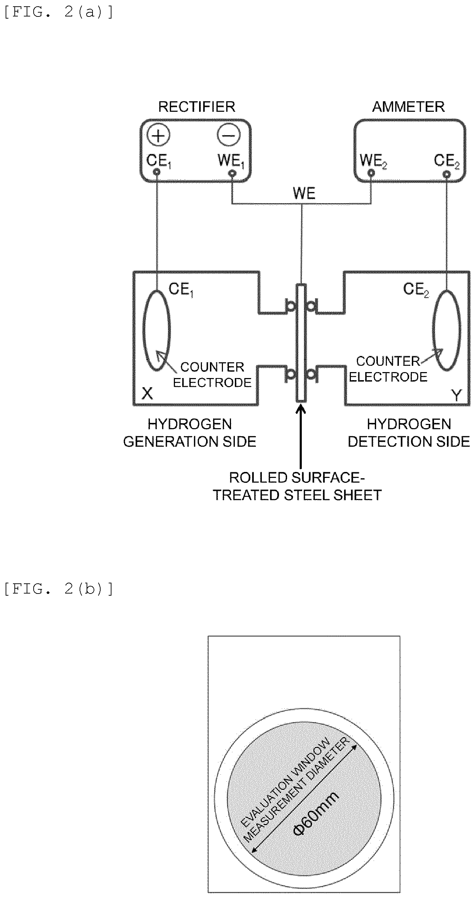

   FIG. 2(a) is a schematic diagram for depicting a method of measuring a hydrogen permeation current density of the rolled surface-treated steel sheet of the present embodiment.
[FIG. 2(b)]
   FIG. 2(b) is a schematic diagram for depicting a method of measuring the hydrogen permeation current density of the rolled surface-treated steel sheet of the present embodiment.
[FIG. 2(c)]

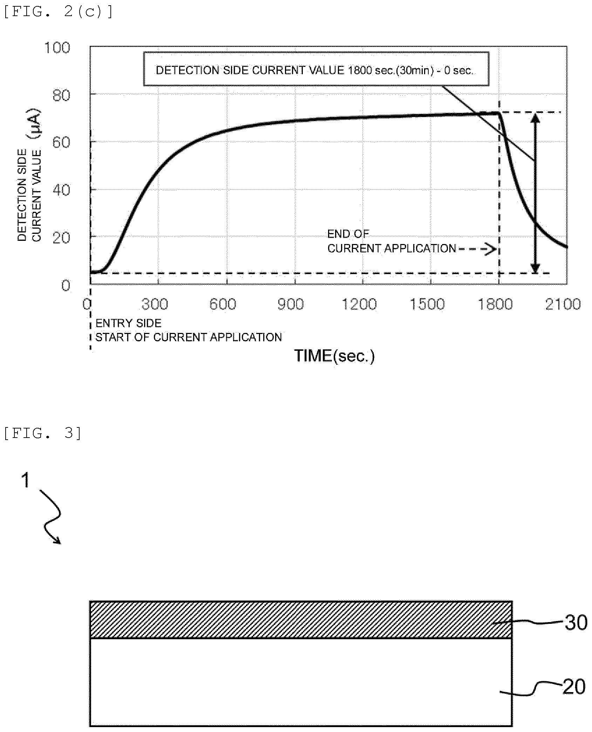

   FIG. 2(c) is a schematic diagram for depicting a method of measuring the hydrogen permeation current density of the rolled surface-treated steel sheet of the present embodiment.
[FIG. 3]
   FIG. 3 is a schematic diagram for depicting a cross section of the rolled surface-treated steel sheet of the present embodiment.
[FIG. 4]

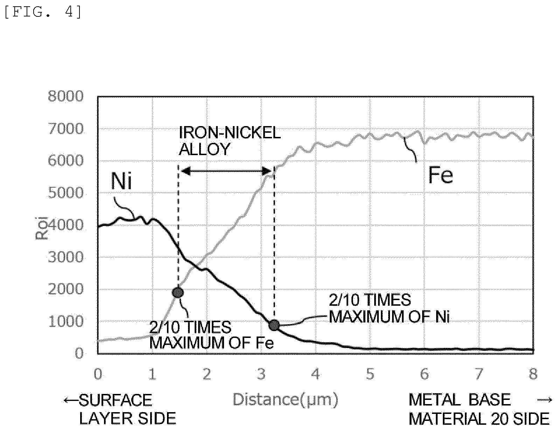

   FIG. 4 is a schematic diagram for depicting a method of obtaining a thickness of an iron-nickel alloy layer included in the rolled surface-treated steel sheet of the present embodiment.
[FIG. 5]

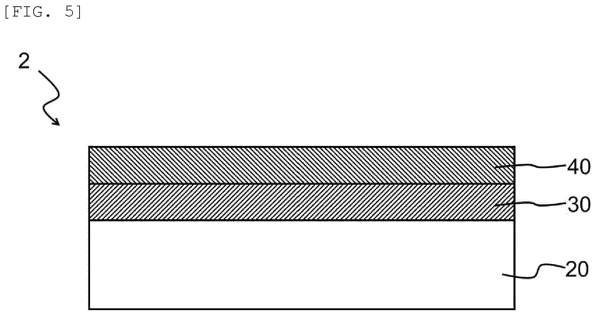

   FIG. 5 is a schematic diagram for depicting a cross section of a rolled surface-treated steel sheet in a modified example of the present embodiment.

### [Description of Embodiment]

### <<Manufacturing method of rolled surface-treated steel sheet>>

Hereinafter, an embodiment for carrying out a manufacturing method of a rolled surface-treated steel sheet of the present invention will be described. It should be noted that a rolled surface-treated steel sheet manufactured by the manufacturing method of the present embodiment is applied to a current collector of a positive electrode or a negative electrode such as a secondary battery, an electronics-related apparatus, and the like.

As depicted in FIG. 1, the manufacturing method of a rolled surface-treated steel sheet of the present embodiment is characterized by having an iron-nickel alloy layer formation step of forming an iron-nickel alloy layer on a steel sheet (original sheet) to be a base material, and a rolling step of rolling the steel sheet having the iron-nickel alloy layer at a rolling reduction of 5% to 25%, after the iron-nickel alloy layer formation step.

### <Preliminary step>

First, an original sheet is prepared. The original sheet mentioned here is a steel portion to be a base material forming an iron-nickel alloy layer by the iron-nickel alloy layer formation step to be described later. The original sheet is preferably low carbon steel or ultra low carbon steel.

As a specific example of the preliminary step, a low carbon hot-rolled steel sheet (hot coil) of approximately 2.0 to 3.0 mm is descaled by a known pickling method. Next, rolling is performed by a known cold rolling method at a rolling reduction of 60% or more to obtain a cold-rolled steel sheet of approximately 0.16 to 1.2 mm, and then known continuous annealing is performed to remove work hardening and soften the steel sheet. Further, it is possible to obtain an original sheet having a desired thickness by intermediate rolling. It should be noted that the preliminary step for obtaining the original sheet is not limited to the above.

The thickness of the original sheet is not particularly limited in the range of 0.03 to 0.8 mm. In the case of obtaining a material having such a thickness as to be called "foil" after a rolling step to be described later, it is preferable to have a thickness of 30 to 190 µm.

As depicted in FIG. 1, an iron-nickel alloy layer is formed on the original sheet with use of the original sheet obtained as described above (iron-nickel alloy layer formation step), and then the steel sheet having the iron-nickel alloy layer is rolled at a rolling reduction of 5% to 25% (rolling step), so that the rolled surface-treated steel sheet of the present embodiment can be manufactured.

### <Iron-nickel alloy layer formation step>

As the iron-nickel alloy layer formation step of the present embodiment, there is a method in which a nickel plating layer is formed on a steel sheet to be a base material (nickel plating step), and then the nickel plating material obtained in the nickel plating step is subjected to heat treatment to form an iron-nickel alloy layer by diffusion (heat treatment step).

### [Examples of nickel plating bath (watt bath) and plating conditions]

### -Bath composition:

Nickel sulfate hexahydrate: 200 to 300 g/L
Nickel chloride hexahydrate: 20 to 60 g/L
Boric acid: 10 to 50 g/L
Bath temperature: 40°C to 70°C
pH: 3.0 to 5.0
Stirring: air stirring or jet stream stirring
Current density: 5 to 30 A/dm²

It should be noted that, as the bath composition, a known nickel sulfamate bath or citric acid bath may be used in addition to the above-described watt bath. Further, a known additive such as a brightener may be added to the plating bath to form a glossy nickel plating or a semi-glossy nickel plating, but a non-glossy nickel plating containing no sulfur-containing brightener or a semi-glossy nickel plating is preferable in order to avoid hardening of the nickel film.

In the manufacturing method of the present embodiment, the amount of nickel adhering in the nickel plating layer or the iron-nickel alloy plating layer formed on the steel sheet is preferably 0.89 to 28.1 g/m² per side, and more preferably 0.93 to 26.7 g/m² from the viewpoints of cost, the electrolytic solution resistance of the obtained rolled surface-treated steel sheet, and the like.

### [Heat treatment step]

The heat treatment step in the present embodiment is a step in which heat is applied to the nickel layer formed on the original sheet, to mutually diffuse iron of the original sheet and nickel of the nickel layer, and an iron-nickel alloy layer is formed by thermal diffusion. The heat treatment step of the present embodiment may be continuous annealing or batch annealing (box annealing).

As an example of the temperature and time in the case of the continuous annealing treatment, it is preferably performed in a soaking time range of 15 to 150 seconds at 650°C to 950°C. In the case where the temperature is lower than this or the time is shorter than this, there is a possibility that a sufficient iron-nickel alloy layer 30 cannot be obtained, which is not preferable. Meanwhile, the heat treatment performed at a higher temperature or for a longer time than the above heat treatment range is not preferable because the mechanical property of the steel foil or the like to be a base material is greatly changed, and the strength is remarkably lowered, or from the viewpoint of cost.

As an example of the temperature and time in the case of the batch annealing (box annealing) treatment, it is preferable that the soaking time be 1.5 to 20 hours at 450°C to 690°C, and the total time totaling the temperature rise, soaking, and cooling time be in the range of 4 to 80 hours. In the case where the temperature is lower than this or the time is shorter than this, there is a possibility that the sufficient iron-nickel alloy layer 30 cannot be obtained, which is not preferable. Meanwhile, the heat treatment performed at a higher temperature or for a longer time than the above heat treatment range is not preferable because there is a possibility that the mechanical property of the steel foil or the like to be a base material is greatly changed, and the strength is remarkably lowered, or from the viewpoint of cost.

### <Rolling step>

Next, the rolling step in the present embodiment will be described. The rolling step in the present embodiment is a step of cold-rolling a steel sheet having an iron-nickel alloy layer formed thereon, after the iron-nickel alloy layer formation step. Objects of the rolling step are to obtain a desired thickness of the rolled surface-treated steel sheet, to control metal crystals contained in the iron-nickel alloy layer to a preferable state, to improve the cracking resistance and the sheet passing property of the obtained rolled surface-treated steel sheet, and the like.

The rolling reduction in the rolling step of the present embodiment is characterized to be 5% to 25%. By setting the rolling reduction to 5% or more, it is considered that orientations of both a (200) plane and a (220) plane can appropriately be mixed with respect to the crystal grains of the Fe₁Ni₁ contained in the iron-nickel alloy layer. Specifically, by the rolling step of the present embodiment, it is preferable that the orientation index in the X-ray diffraction (XRD) be set such that the orientation index of the (200) plane of Fe₁Ni₁ in the X-ray diffraction (hereinafter, also referred to as the orientation index of the (200) plane) is 0.7 or more and the orientation index of the (220) plane of Fe₁Ni₁ in the X-ray diffraction (hereinafter, also referred to as the orientation index of the (220) plane) is 0.7 or more but less than 2.5. Further, it is preferable that the difference (absolute value) between the orientation index of the (200) plane of Fe₁Ni₁ in the X-ray diffraction and the orientation index of the (220) plane of Fe₁Ni₁ in the X-ray diffraction be 1.0 or less. In the rolling step of the present embodiment, it is considered to be possible to improve the cracking resistance while maintaining the appropriate hardness of the surface of the obtained rolled surface-treated steel sheet by controlling the crystalline state of the iron-nickel alloy as described above.

Meanwhile, from the viewpoint of the cracking resistance when elongation is applied to the obtained rolled surface-treated steel sheet, it is preferable that the upper limit of the rolling reduction in the rolling step be set to 25%.

It should be noted that the orientation index of the (200) plane of Fe₁Ni₁ in the X-ray diffraction and the orientation index of the (220) plane of Fe₁Ni₁ in the X-ray diffraction in the present embodiment will be described later.

Further, it is preferable that the average crystal grain size of nickel according to measurement data of EBSD be 0.4 to 1.1 µm by the rolling step of the present embodiment. It should be noted that the average crystal grain size by the EBSD can be obtained by a known measurement apparatus and measurement program. Specifically, the average crystal grain size can be obtained by obtaining and analyzing information concerning a diffraction pattern called a Kikuchi pattern under the following conditions. At the time of measurement, the diffraction pattern of nickel is specified, but since information can be obtained by the same diffraction pattern from an iron-nickel alloy having a face-centered cubic crystal structure close to that of nickel, the average crystal grain size of nickel according to the EBSD measurement data in the present invention is the average crystal grain size of crystals of nickel, crystals of the iron-nickel alloy, or crystals of nickel and crystals of the iron-nickel alloy.

### <EBSD measurement conditions and analysis conditions>

- Scanning electron microscope (SEM): SU8020 manufactured by Hitachi High-Tech Corporation
- Measurement program: OIM Data Collection
- Data analysis program: OIM Analysis (Ver. 6.2.0)
- Measurement range: 100 µm × 120 µm
- Grain Tolerance Angle: 5°
- Step width: 0.20 µm
- Average Number (Diameter)

In the rolling step of the present embodiment, it is considered that, by rolling at a rolling reduction of 5% to 25% after the iron-nickel alloy layer is formed, the crystal orientation of the nickel alloy can appropriately be present in both the orientations of the (200) plane and the (220) plane, processing strain is applied, and the average crystal grain size of nickel according to the EBSD measurement data can be controlled in the range of 0.4 to 1.1 µm as described above. It is considered that an increase in the friction coefficient of the surface of the obtained rolled surface-treated steel sheet can be suppressed by setting the average crystal grain size in this range. In addition, it is considered that the hardness of the uppermost surface of the obtained rolled surface-treated steel sheet and the intermediate layer between the base material and the uppermost surface can be set to an appropriate range.

In the rolling step of the present embodiment, one set or a plurality of sets of acting rolling rolls may be used. A rolling mill is usually configured by combining a plurality of upper and lower rolls, that is, rolling rolls, acting directly to thin the sheet, and rolls for passing the sheet. During rolling, there may be one set of rolling rolls acting on the rolling or a plurality of rolling rolls acting on the rolling. In the present embodiment, one set or a plurality of sets of rolling rolls acting in the rolling step may be used, and, for example, the sheet may be rolled by passing through three sets of rolling rolls twice, which is a total of six sets of rolling rolls. In general, as the number of times the sheet passes through the rolling rolls increases, problems due to work hardening are likely to occur during rolling. For this reason, the number of rolling rolls is preferably six sets of rolling rolls or less, and more preferably three sets or less, and two sets or one set may be used. It should be noted that the one set of rolling rolls herein means upper and lower rolls which directly contact the sheet and before and after which the thicknesses changes.

In addition, the above-described rolling reduction means a rolling reduction obtained from the thickness of the sheet before and after the rolling step. That is, when the sheet passes through three sets of rolling rolls twice, the above-described rolling reduction means a rolling reduction obtained from the thickness before the first pass and the thickness after the second pass.

In the rolling step, a rolling reduction of 10% to 20% is more preferable from the viewpoint of improving the cracking resistance and sheet passing property of the rolled surface-treated steel sheet. It should be noted that the rolling reduction by the first set of rolling rolls is not particularly limited to any percentage.

After the rolling step, a rolled surface-treated steel sheet can be obtained. The amount of nickel adhering in the obtained rolled surface-treated steel sheet is preferably 0.89 to 26.7 g/m² per side.

### <<Rolled surface-treated steel sheet>>

Hereinafter, the rolled surface-treated steel sheet in the present embodiment will be described. It should be noted that the rolled surface-treated steel sheet in the present embodiment is manufactured by the above-described manufacturing method.

A rolled surface-treated steel sheet 1 of the present embodiment includes a base material 20 made of steel and an iron-nickel alloy layer 30 provided on the base material 20.

### <Base material 20>

As the base material 20 configuring the rolled surface-treated steel sheet 1 of the present embodiment, a steel sheet based on iron containing less than 1.0 wt% of Cr and other added metal elements is preferable. Specifically, low carbon steel (0.01 to 0.15 wt% of carbon) represented by low carbon aluminum-killed steel, ultra low carbon steel having less than 0.01 wt% of carbon, or non-aging property ultra low carbon steel formed by adding Ti, Nb, or the like to ultra low carbon steel is preferably used.

The thickness of the base material 20 configuring the rolled surface-treated steel sheet 1 of the present embodiment is preferably in the range of 0.03 to 0.8 mm, and more preferably in the range of 0.03 to 0.15 mm. The thickness of the base material 20 is preferably measured by cross section observation using an optical microscope or a SEM.

### <Iron-nickel alloy layer 30>

The iron-nickel alloy layer 30 included in the rolled surface-treated steel sheet 1 of the present embodiment is an alloy layer containing iron (Fe) and nickel (Ni), and is a metal layer containing an alloy (also referred to as an "iron-nickel alloy" or an "Fe-Ni alloy") composed of iron and nickel. It should be noted that the alloy state composed of iron and nickel may be any of a solid solution, eutectoid/eutectic, and a compound (intermetallic compound), or they may coexist.

The iron-nickel alloy layer 30 included in the rolled surface-treated steel sheet 1 of the present embodiment may contain other metal elements or inevitable impurities as long as the problem of the present invention can be solved. For example, the iron-nickel alloy layer 30 may contain metal elements such as cobalt (Co) and molybdenum (Mo) or an additive element such as boron (B). It should be noted that the ratio of the metal elements other than iron (Fe) and nickel (Ni) in the iron-nickel alloy layer 30 is preferably 10 wt% or less, more preferably 5 wt% or less, and still more preferably 1 wt% or less. Since the iron-nickel alloy layer 30 may be a binary alloy composed of substantially only iron and nickel, the lower limit of the content ratio of other metal elements excluding inevitable impurities is 0%.

The types and amounts of other contained metal elements can be measured by known means such as an X-ray fluorescence (XRF) measurement device or a glow discharge optical emission spectrometry (GDS).

The rolled surface-treated steel sheet 1 of the present embodiment is characterized in that the above-described iron-nickel alloy layer 30 contains Fe₁Ni₁, the orientation index of the (200) plane of Fe₁Ni₁ in the X-ray diffraction is 0.7 or more, and the orientation index of the (220) plane of Fe₁Ni₁ in the X-ray diffraction is 0.7 or more but less than 2.5. Further, it is preferable that the difference (absolute value) between the orientation index of the (200) plane of Fe₁Ni₁ in the X-ray diffraction and the orientation index of the (220) plane of Fe₁Ni₁ in the X-ray diffraction be 1.0 or less. It should be noted that the above orientation index can be realized by application of rolling to the iron-nickel alloy layer 30. With the above orientation index, it is considered that the cracking resistance and the sheet passing property can be improved while the appropriate hardness of the surface of the rolled surface-treated steel sheet 1 is maintained. In addition, with a random orientation in which the (200) plane and the (220) plane are appropriately mixed, the passage (path) of hydrogen between the crystals can be made longer, possibly offering excellent hydrogen barrier property. The orientation index of the (220) plane is preferably 0.7 or more but less than 2.0, and more preferably 0.7 or more but less than 1.9, from the viewpoint of maintaining appropriate hardness and improving the cracking resistance and the sheet passing property. The upper limit value of the (200) plane is preferably 2.0 or less, and more preferably 1.7 or less, from the viewpoint of maintaining appropriate hardness and improving the cracking resistance and the sheet passing property. In addition, from the viewpoint of obtaining more stable sheet passing property, it is more preferable that the difference (absolute value) between the orientation index of the (200) plane and the orientation index of the (220) plane be 0.8 or less, and more preferably 0.7 or less. Since the orientation index of the (200) plane and the orientation index of the (220) plane may be the same value, the lower limit of the difference between them is 0.

The crystal orientation index Ico_Fe₁Ni₁(200) of the (200) plane of Fe₁Ni₁ in the X-ray diffraction and the crystal orientation index Ico_Fe₁Ni₁(220) of the (220) plane of Fe₁Ni₁ in the X-ray diffraction were defined and calculated by the following equations. The subscript "co" means crystal orientation. Ico_Fe1Ni1 (200) = [I_Fe1Ni1 (200) / [I_Fe1Ni1(111)+I_Fe1Ni1(200)+I_Fe1Ni1(220)+I_ Fe1Ni1 (311)+I_Fe1Ni1(222)] ] /[IS_Fe1Ni1(220)/[IS_Fe1Ni1 (111)+IS_Fe1Ni1 (200) +IS_Fe1Ni1 (220 )+IS_Fe1Ni1(311)+IS_Fe1Ni1(222)]] Ico_Fe1Ni1(220)= [I_Fe1Ni1(220)/[I_Fe1Ni1(111)+I_Fe1Ni1(200)+I_Fe1Ni1(220)+I_ Fe1Ni1 (311)+I_Fe1Ni1(222)]] /[IS_Fe1Ni1 (220)/[IS_Fe1Ni1(111)+IS_Fe1Ni1(200) +IS_Fe1Ni1(220 )+IS_Fe1Ni1(311)+IS_Fe1Ni1(222)]]

Here, the diffraction intensity of each crystal plane of Fe₁Ni₁ measured by the X-ray diffraction is expressed as follows.
I_Fe₁Ni₁(111): Diffraction intensity of Fe₁Ni₁(111) crystal plane measured by X-ray diffraction
I_Fe₁Ni₁(200): Diffraction intensity of Fe₁Ni₁(200) crystal plane measured by X-ray diffraction
I_Fe₁Ni₁(220): Diffraction intensity of Fe₁Ni₁(220) crystal plane measured by X-ray diffraction
I_Fe₁Ni₁(311): Diffraction intensity of Fe₁Ni₁(311) crystal plane measured by X-ray diffraction
I_Fe₁Ni₁(222): Diffraction intensity of Fe₁Ni₁(222) crystal plane measured by X-ray diffraction

The diffraction intensity mentioned here is the maximum value of diffraction intensity (cps) measured in the range of each diffraction angle (28)±0.11° described in Joint Committee on Powder Diffraction Standards (JCPDS, PDF Card Number: 01-071-8322).

Specifically, the maximum value for the (111) plane is in the range of 43.83°±0.11°, the maximum value for the (200) plane is in the range of 51.05°±0.11°, the maximum value for the (220) plane is in the range of 75.10°±0.11°, the maximum value for the (311) plane is in the range of 91.23°±0.11°, and the maximum value for the (222) plane is in the range of 96.56°±0.11°.

Further, from the viewpoint of further improving the cracking resistance and the sheet passing property, it is preferable that the orientation index of the Fe₁Ni₁(111) plane calculated in the same manner as that above be 0.3 to 2.0 in the iron-nickel alloy in the iron-nickel alloy layer 30 of the rolled surface-treated steel sheet 1 in the present embodiment. Although the details are unknown, it is considered that the crystal orientation is not biased to the (111) plane in addition to the (200) plane and the (220) plane, so that the characteristics can be further improved. More preferably, the orientation index of the Fe₁Ni₁(111) plane is 0.3 to 1.3. Further, it is preferable that the orientation index of the Fe₁Ni₁(111) plane be 0.3 to 1.0 or the orientation index of the (111) plane be smaller than those of the (200) plane and the (220) plane.

Next, a method of evaluating a hydrogen barrier property will be described. In the case where hydrogen permeates and moves through the rolled surface-treated steel sheet, hydrogen atoms reaching the hydrogen detection side from the hydrogen entry side are oxidized to become hydrogen ions. Since the value of the oxidation current at this time increases or decreases according to the amount of hydrogen reaching the hydrogen detection surface, the hydrogen barrier property of the rolled surface-treated steel sheet can be digitized and evaluated by the detected current value. (Tooru Tsuru, Tokyo Institute of Technology, Zairyo-to-Kankyo (Materials and Environments), 63, 3-9 (2014), Electrochemical Measurements for Hydrogen Entry and Permeation of Steel)

As a result of the above prediction, the inventors conducted measurement and evaluation, and concluded that, in order to suppress the occurrence of a voltage drop (self-discharge) as described above in the present embodiment, the rolled surface-treated steel sheet of the present embodiment preferably has a hydrogen permeation current density of 10 µA/cm² or less obtained from the electrochemically-measured oxidation current value. It should be noted that, in the present embodiment, the hydrogen permeation current density is measured under the conditions that the temperature of the electrolyte solution is 45°C, and a current of 2.25 A is applied to the hydrogen entry side and no current is applied to the hydrogen detection side for a measurement area (28.26 cm²) with a measurement diameter ϕ of 60 mm. Here, the reason why the current value on the hydrogen generation side is set to 2.25 A is to sufficiently generate the amount of hydrogen necessary for permeation and movement through the rolled surface-treated steel sheet.

As a specific example of a method of measuring the hydrogen permeation current density in the present embodiment, the hydrogen barrier property of the rolled surface-treated steel sheet can be digitized and evaluated by detecting a current value (current density) with use of measurement devices having configurations depicted in FIG. 2(a). The measurement devices depicted in FIG. 2(a) will be described below. In the following description, the hydrogen entry side is also referred to as a hydrogen generation side, and is the side on which a hydrogen storage alloy having a bipolar electrode structure is arranged. In addition, the hydrogen detection side is on the opposite side of the hydrogen entry side and is the positive electrode side of the bipolar electrode structure.

Two cells of a cell X for hydrogen generation and a cell Y for detecting permeating hydrogen are prepared, and a test piece (sample) of the rolled surface-treated steel sheet is placed between the two measurement cells. Each measurement cell is filled with an electrolytic solution (alkaline aqueous solution which contains 6 mol/L of KOH as the main component and in which the total concentration of KOH, NaOH, and LiOH is 7 mol/L), and counter electrodes (CE1 and CE2) are immersed therein. Platinum (Pt) is used for the counter electrodes. In addition, the temperature of the electrolytic solution is 45°C. In addition, as depicted in FIG. 2(b), the measurement diameter in the rolled surface-treated steel sheet is assumed to be ϕ60 mm (measurement area 28.26 cm²).

As depicted in FIG. 2(a), a rectifier is used for current control on the hydrogen entry side. As the rectifier, for example, "Compact DC Stabilized Power Supply PMX18-5A" manufactured by KIKUSUI ELECTRONICS CORPORATION can be used. In addition, as depicted in FIG. 2(a), an ammeter is used to measure the current on the hydrogen detection side. As the ammeter, for example, "Digital Multimeter DT4282" manufactured by HIOKI E.E. CORPORATION can be used. It should be noted that the sample of the rolled surface-treated steel sheet to be evaluated and the connection of each device can be implemented as depicted in FIG. 2(a).

On the hydrogen generation side X, 2.25 mA is applied to the sample for 30 minutes to generate hydrogen on the sample surface and allow hydrogen to enter. It should be noted that no potential is applied on the hydrogen detection side Y, and only the ammeter is connected. In the case where hydrogen atoms permeate the rolled surface-treated steel sheet from the hydrogen generation side, if the permeating hydrogen atoms are oxidized on the hydrogen detection side, the oxidation current measured by the ammeter on the hydrogen detection side changes (increases). Therefore, the hydrogen permeability of the rolled surface-treated steel sheet can be digitized and evaluated by the change in oxidation current.

It should be noted that, before the current application on the hydrogen generation side, the surface of the rolled surface-treated steel sheet is immersed and held in the electrolytic solution for 20 minutes or more to stabilize the surface, and it is confirmed that the current value of the ammeter on the hydrogen detection side is stable at 10 µA or less. By the above step, it is possible to obtain the minimum value of the oxidation current to be described later. It should be noted that the measurement plot of the oxidation current value is set every 10 seconds.

The hydrogen permeation current density I (µA/cm²) can be calculated by the change in oxidation current on the hydrogen detection side obtained by the above method. Specifically, the hydrogen permeation current density is obtained by dividing the difference between the oxidation current at 30 minutes after the current application and the current value immediately before the current application (0 seconds) by a measurement area of 28.26 cm². A plot and a digitization image of the hydrogen permeation current density I (µA/cm²) are depicted in FIG. 2(c).

In the present embodiment, in the case where the hydrogen permeation current density on the hydrogen detection side was 10 µA/cm² or less when measured under the condition that the current value on the hydrogen entry side was 2.25 A in the electrolytic solution of 45°C with use of the devices depicted in FIG. 2, it was concluded that it was suitable for the bipolar electrode from the viewpoint of the hydrogen barrier property in the rolled surface-treated steel sheet. From the viewpoint of further suppressing the voltage drop, the hydrogen permeation current density is more preferably 2.5 µA/cm² or less, more preferably 2.0 µA/cm² or less, and still more preferably less than 1.0 µA/cm².

Further, on the surface of the iron-nickel alloy layer 30 of the rolled surface-treated steel sheet 1 in the present embodiment, it is preferable that the average crystal grain size of nickel according to the measurement data obtained by the EBSD be 0.4 to 1.1 µm. It should be noted that the average grain size can be realized by applying rolling to the iron-nickel alloy layer 30. It should be noted that the average crystal grain size according to the EBSD can be obtained by a known measurement apparatus and measurement program as described above. It is considered that an increase in the friction coefficient of the surface of the rolled surface-treated steel sheet 1 can be suppressed by controlling the average crystal grain size. In addition, it is considered that the hardness of the uppermost surface of the rolled surface-treated steel sheet 1 and the intermediate layer between the base material and the uppermost surface can be set to an appropriate range.

The surface hardness of the rolled surface-treated steel sheet 1 in the present embodiment is preferably 120 to 230 at a depth of 0 to 2.2 µm from the surface when measured using a micro Vickers hardness tester with a load of 10 g, from the viewpoint of cracking resistance and scratch resistance. The surface hardness is more preferably 126 to 230, and still more preferably 136 to 230. Further, from the viewpoint of the scratch resistance, the hardness at a depth of 2.2 to 4.4 µm from the surface when measured with a load of 50 g is preferably 110 to 200, and more preferably 120 to 200.

In the rolled surface-treated steel sheet 1 of the present embodiment, it is preferable that the friction coefficient in the fourth round in a ball-on-disk type friction test be 0.4 or less, from the viewpoint of scratch resistance. Meanwhile, the lower limit of the friction coefficient is not particularly limited, but is usually 0.05 or more.

In addition, from the viewpoint of suppressing the scratching property attributable to wear when repeatedly contacting the rolls at the time of passing through the rolls, the sum (hereinafter, also referred to as the sum of the friction coefficients up to the fifth round) of the friction coefficients at a pitch of 0.5 round from 0 round to the fifth round is preferably less than 4.0, more preferably less than 3.5, and still more preferably 3.1 or less. It should be noted that, although there is no particular lower limit of the sum of the friction coefficients up to the fifth round, it is usually 0.3 or more.

The ball-on-disk type friction test conforms to JIS R 1613:2010 and is conducted using a chromium steel ball (SUJ2) having a ball diameter of 6 mm as a contactor under the conditions of a rotation radius of 10 mm, a load of 1.0 N, and a motor speed of 10 rpm, and after the test is conducted with the number of rotations of 10, the sum of the friction coefficients in the fourth round and the friction coefficients up to the fifth round can be obtained.

Next, the thickness of the iron-nickel alloy layer 30 will be described. The thickness of the iron-nickel alloy layer 30 included in the rolled surface-treated steel sheet 1 of the present embodiment is preferably 0.4 µm or more, more preferably 0.5 µm or more, and still more preferably 0.6 µm or more. There is no upper limit in particular, but if the thickness is too thick, there is a possibility that the ratio of a hard layer in the rolled surface-treated steel sheet 1 increases and the steel sheet is easily cracked, and the resistance increases, so that the thickness is preferably 6 µm or less per side, and more preferably 4 µm or less. In particular, in the case where a continuous steel strip is used as the base material 20, that is, in the case where surface treatment is applied to the continuous steel strip to obtain the rolled surface-treated steel sheet having the iron-nickel alloy layer of the present embodiment, the thickness of the iron-nickel alloy layer 30 is preferably 3.5 µm or less, and more preferably 3.0 µm or less, from the viewpoint of controlling the plating adhesion amount and avoiding unevenness in the heat treatment.

In the present embodiment, a method of calculating the thickness of the iron-nickel alloy layer 30 will be described. As a method of calculating the thickness of the iron-nickel alloy layer 30 of the present embodiment, the quantitative analysis of nickel and iron at a depth up to at least 10 µm in the thickness direction from the surface layer side can be conducted by the analysis of SEM-energy dispersive X-ray spectroscopy (EDX) at a cross section of the rolled surface-treated steel sheet 1. In the case where the thickness of the iron-nickel alloy layer exceeds 10 µm, quantitative analysis is conducted up to the required depth.

An example of a method of obtaining the thickness of the iron-nickel alloy layer 30 from a graph obtained by the SEM-EDX is depicted. In the graph of FIG. 4, the horizontal axis represents a distance (µm) in the depth direction from the surface layer side, and the vertical axis represents the X-ray intensities of Ni and Fe. The graph in FIG. 4 depicts that the nickel content is high and the iron content is low in a shallow portion in the thickness direction. In contrast, the iron content increases along the thickness direction.

At portions prior to and subsequent to the position where the curve line of nickel and the curve line of iron curve intersect with each other, the distance between 2/10 of the maximum value of nickel and 2/10 of the maximum value of iron can be read as the thickness of the iron-nickel alloy layer 30 from the graph in the present embodiment.

It should be noted that, in the present embodiment, the distance between 2/10 of the maximum value of nickel and 2/10 of the maximum value of iron is regarded as the thickness of the iron-nickel alloy layer 30 for the following reasons.

That is, in the present invention, although the thickness of the iron-nickel alloy layer 30 is preferably set to a predetermined value or more, in the case where the thickness of the iron-nickel alloy layer 30 is measured by the SEM-EDX, it was found that the iron strength at the position where the nickel strength peaked was detected as a numerical value of approximately 10% to 20% of the nickel strength even in a sample not subjected to heat treatment, that is, a sample with no diffusion of iron in nickel. In addition, after the nickel strength was attenuated, that is, in the measurement of the portion of the base material 20, the nickel strength was continuously detected as a numerical value of approximately 3% to 8% of the maximum nickel strength. The nickel strength at this time was approximately 2% of the iron strength, and did not fall below 1% even when the measurement was continued for 2 µm or more after the attenuation. That is, in the measurement by the SEM-EDX, it was found that the nickel strength and the iron strength were affected by each other in a trace range. Therefore, in the present specification, a range in which a strength of 2/10 or more of each maximum strength is detected is defined as the thickness of the alloy layer that is more reliably alloyed.

It should be noted that, in FIG. 1, the iron-nickel alloy layer 30 is provided on one side of the base material 20, but is not limited thereto, and is preferably provided on each of both sides of the base material 20, although not illustrated. In addition, in the case where the iron-nickel alloy layer 30 is provided on each of both sides, the thickness of one iron-nickel alloy layer 30 may be the same as or different from that of the other iron-nickel alloy layer 30.

As a method of forming the iron-nickel alloy layer 30, a method by plating or plating and heat treatment is preferable, and the plating includes, for example, electrolytic plating, electroless plating, hot-dip plating, dry plating, and the like. Of these, a method by the electrolytic plating is particularly preferable from the viewpoint of cost and film thickness control.

For example, there is a method in which a nickel plating layer is formed on at least one sides of the base material 20 by a method such as electrolytic plating, and then iron (Fe) in the base material 20 and nickel (Ni) in the nickel plating layer are diffused and alloyed by thermal diffusion treatment or the like, or a method in which an alloy layer is formed by iron-nickel alloy plating. In particular, in order to obtain the rolled surface-treated steel sheet excellent in cracking resistance and sheet passing property by controlling the crystal orientation and the grain size, it is preferable that nickel plating be performed, iron and nickel be mutually diffused by heat treatment to be alloyed, and the iron-nickel alloy layer be formed.

In the rolled surface-treated steel sheet 1 of the present embodiment, the amount of nickel adhering in the iron-nickel alloy layer 30 is preferably 0.89 to 26.7 g/m². It should be noted that the amount of nickel adhering in the iron-nickel alloy layer 30 can be measured by XRF or the like.

As a method of measuring the nickel adhesion amount in the present embodiment, for example, the methods described in PCT Patent Publication No. WO2020/017655 and PCT Patent Publication No. WO2021/020338, and the like can be appropriately adopted. That is, the total nickel amount of the rolled surface-treated steel sheet 1 can be measured and obtained by use of the XRF or the like.

The entire thickness of the rolled surface-treated steel sheet 1 in the present embodiment will be described. It should be noted that the "thickness of the rolled surface-treated steel sheet 1" in the present embodiment can also be applied to thickness measurement by cross section observation with a SEM or thickness measurement with a micrometer.

The entire thickness of the rolled surface-treated steel sheet 1 in the present embodiment is preferably in the range of 0.03 to 0.8 mm. In addition, from the viewpoint of strength, desired battery capacity, and the like, 0.03 to 0.3 mm is more preferable, and 0.03 to 0.15 mm is still more preferably used in the case where the steel sheet is used as foil for which the cracking resistance and the sheet passing property are required more.

In the case where the thickness exceeds the upper limit of the above thickness range, it is not preferable because the surface load (elongation, etc.) against the deformation at the time of passing the sheet becomes higher and the surface deformation increases more when the sheet is thick. In contrast, if the thickness is less than the lower limit of the above thickness range, there is a high possibility that breakage, tear, wrinkles, or the like occurs at the time of handling or the like, and when used as a battery member, it may be difficult to have a sufficient strength against the influence accompanying the charging and discharging of the battery.

### <<Modified example>>

It should be noted that, as depicted in FIG. 5, the present embodiment may be a rolled surface-treated steel sheet 2 in which a metal layer 40 is formed on the iron-nickel alloy layer 30. It should be noted that the metal layer 40 may be a nickel layer, or a layer composed of metal other than nickel, such as a layer composed of zinc, tin, or chromium. Zinc or tin may be an alloy layer based thereon. A layer composed of chromium also includes a chromate layer. The iron-nickel alloy layer 30 of the present embodiment follows the elongation of the base material and has a characteristic that it is less likely to be cracked. Further, also in the case where the metal layer 40 is formed on the upper layer, the iron-nickel alloy layer serving as the intermediate layer is less likely to be cracked, and thus the cracking resistance of the metal layer 40 (for example, a nickel layer) on the surface layer is also excellent. The thickness of the metal layer 40 is preferably 0.05 to 3.0 µm. In the case where the nickel layer is formed as the metal layer 40, the thickness of the upper nickel layer is preferably 0.05 to 0.8 µm, more preferably 0.1 to 0.8 µm, and still more preferably 0.15 to 0.7 µm, especially from the viewpoint that the nickel layer has a crystal structure inheriting the lower iron-nickel alloy layer 30 and the crack resistance is excellent. The upper nickel layer can be formed by nickel plating in a steel sheet obtained after rolling the iron-nickel alloy layer.

In the rolled surface-treated steel sheet 2, the crystal orientation and the average crystal grain size of nickel are measured in the formed state in the case where the metal layer 40 is a nickel layer or a layer composed of chromium. That is, the iron-nickel alloy layer 30 in the rolled surface-treated steel sheet 2 is characterized in that the iron-nickel alloy layer 30 contains Fe₁Ni₁, the orientation index of the (200) plane of Fe₁Ni₁ in the X-ray diffraction is 0.7 or more, and the orientation index of the (220) plane of Fe₁Ni₁ in the X-ray diffraction is 0.7 or more but less than 2.5. Further, it is preferable that the difference (absolute value) between the orientation index of the (200) plane of Fe₁Ni₁ in the X-ray diffraction and the orientation index of the (220) plane of Fe₁Ni₁ in the X-ray diffraction be 1.0 or less. In addition, it is more preferable that the (111) plane of Fe₁Ni₁ have an orientation index of 0.3 to 2.0 in the X-ray diffraction. It should be noted that, in the case where the metal layer 40 is a layer composed of zinc or tin, measurement is preferably performed after dissolving only the metal layer 40.

On the surface of the metal layer 40 in the case where the metal layer 40 of the rolled surface-treated steel sheet 2 is a nickel layer in the present embodiment, it is preferable that the average crystal grain size of nickel according to the measurement data of the EBSD be 0.4 to 1.1 µm. It should be noted that, as in the above-described embodiment, the average crystal grain size of nickel in the present disclosure is the average crystal grain size of crystals of nickel, crystals of the iron-nickel alloy, or crystals of nickel and crystals of the iron-nickel alloy. That is, in the present modified example, although the iron-nickel alloy layer 30 may be partially exposed on the surface of the rolled surface-treated steel sheet 2 depending on the thickness or irregularity of the metal layer 40, the value of the average crystal grain size of nickel on the surface of the rolled surface-treated steel sheet 2 is a value reflecting the grain sizes of both the iron-nickel alloy layer 30 and the metal layer 40. It should be noted that, in the case where the metal layer 40 is a layer composed of zinc or tin, measurement is preferably performed after dissolving only the metal layer 40.

In the rolled surface-treated steel sheet 1 of the present embodiment, it is preferable that the surface thereof be the iron-nickel alloy layer 30 and at least the ratio of iron on the uppermost surface be 0% to 65% or less. It should be noted that the ratio of iron on the surface of the above rolled surface-treated steel sheet can be measured by a GDS. In addition, the surface of the rolled surface-treated steel sheet 2 in the above modified example is the metal layer 40 (for example, a nickel layer). Even in the modified example in which the metal layer 40 is a nickel layer, it is preferable that at least the ratio of iron on the uppermost surface be 0% to 65% or less. It should be noted that, even in the modified example, the ratio of iron can be measured by the GDS.

### <<Example>>

Hereinafter, the present invention will more specifically be described by using examples. First, a measurement method in the example will be described.

### [Measurement and evaluation of cracks (Vickers hardness)]

The Vickers hardness in the surface layer of the rolled surface-treated steel sheet was evaluated by measurement with a hardness meter. A micro Vickers hardness tester (HM-103 manufactured by Mitutoyo Corporation) was used to measure the hardness in compliance with JIS Z 2244 (Vickers hardness test-test method). Two types of indenters with a load of 10 g and a load of 50 g were used. As a result of measuring the hardness with a load of 10 g, it was possible to measure the hardness at a depth of 0 to 2.2 µm and obtain hardness in both the examples and comparative examples. In addition, as a result of measuring the hardness with a load of 50 g, it was possible to measure the hardness at a depth of 2.2 to 4.4 µm and obtain hardness in both the examples and comparative examples.

### [Measurement and evaluation of cracks (likelihood of exposure of Fe after stress application)]

Regarding cracking characteristics of the rolled surface-treated steel sheet, after an elongation of 3% was applied by a tensile test (JIS Z 2241), SEM observation using a SEM and energy dispersive X-ray analysis (EDX) were performed to observe the exposure of iron (Fe) from the surface. The measurement conditions were as follows.

### -Tensile test conditions

- Sample size: JIS K 6251 standard test piece No. 6
- Tensile device: AGX-V manufactured by SHIMADZU CORPORATION
- Extensometer: TRViewX manufactured by SHIMADZU CORPORATION
- Tensile speed: 1.0 (mm/min)
- Elongation percentage: 1.0%, 3.0%
- SEM conditions
- Device: VE-8800 manufactured by KEYENCE CORPORATION
- Beam conditions: accelerating voltage 15 kV, irradiation current amount 5×10⁻⁸ A
- Work distance: 35 mm
- Observation field: 150 µm × 150 µm
- Observation surface: rolled surface
- Observation magnification: 1000 times, 3000 times

### EDS conditions

Device: X-act manufactured by Oxford Instruments
Analysis method: 10 points (N=10)

For the sample with an elongation of 3.0% applied by the tensile test, 10 desired points of the recessed surface in the SEM image were observed, and EDS point analysis was performed at each observation point. The presence or absence of an (Fe-rich) portion where the peak of iron is remarkably high as compared with other measurement points was confirmed, and the number was counted as the number of confirmed. If there is an Fe-rich portion, it is determined that cracks were generated when an elongation of 3.0% was applied and iron was easily exposed. It is preferable that the confirmation points of the Fe-rich portion be 6 points or less, and more preferably 3 points or less. Further, in each EDS point analysis, the count number of Kα of Ni to the count number of Kα of Fe was calculated as a ratio. This ratio is referred to as a Kα count ratio. A portion where the Kα count ratio was less than 3.0 was defined as a portion other than the Fe-rich portion, and a portion where the Kα count ratio became maximum was defined as the most Fe-rich portion. Further, the ratio (count number ratio) of the Kα count ratio at a portion other than the Fe-rich portion to the Kα count ratio at the most Fe-rich portion was calculated to evaluate the degree of exposure of iron components.

That is, the count number ratio in Table 2 is calculated by the following equation. Kα count ratio = count number of Kα of Fe at measurement point/count number of Kα of Ni at measurement point Count number ratio = Kα count ratio at the most Fe-rich portion/Kα count ratio at portion other than Fe-rich portion

When the count number ratio is higher, it indicates that iron is exposed. When the count number ratio exceeds 100, it is determined that iron in the base material is exposed; when it is 20 or more but 100 or less, it is determined that iron in the base material or the iron-nickel alloy layer is exposed; when it is 5 or more but less than 20, it is determined that at least iron components are exposed; and when it is less than 5, it is determined that iron exposure is sufficiently controlled.

### [Measurement and evaluation of sheet passing property (Ball-on-Disk test)]

The frictional characteristics of the rolled surface-treated steel sheet were measured by a ball-on-disk type friction test (friction and wear tester: Tribometer TRB3 manufactured by Anton Paar GmbH), and the sheet passing property was evaluated. A chromium steel ball (SUJ2) having a ball diameter of 6 mm was used as a contactor, and the rotation radius was set to 10 mm, the load was set to 1.0 N, the motor speed was set to 10 rpm, and the number of rotations was set to 10. In addition, the friction test was conducted under the condition of no lubricant (dry condition) in compliance with JIS R 1613:2010.

As the friction coefficient, the value provided by software of the tester was used. Then, the sheet passing property was evaluated by comparing the friction coefficient in the fourth round where a clear difference in friction coefficient appeared with the sum of the friction coefficients at a pitch of 0.5 round from 0 round to the fifth round. The sheet passing property was evaluated to be high in view of the facts that die and roll damage in processing and continuous coating was reduced owing to the lower friction coefficient, which led to the improved quality of materials, and that damage to facilities (the die and the roll) was small, which lead to longer service life of the facilities.

### [Measurement (hydrogen permeation current density measurement) and evaluation of hydrogen barrier property]

The hydrogen permeation current density was measured using the devices depicted in FIG. 2. As a specific sample setting method, as depicted in FIG. 2(a), two cells of a cell X for hydrogen generation and a cell Y for detecting permeating hydrogen were prepared, and a test piece (sample) of the rolled surface-treated steel sheet was placed between the two measurement cells. Then, each measurement cell was filled with an electrolytic solution (alkaline aqueous solution that contains 6 mol/L of KOH as the main component and in which the total concentration of KOH, NaOH, and LiOH is 7 mol/L), and counter electrodes (CE1 and CE2) were immersed therein. In addition, platinum (PT) was used for the counter electrodes. It should be noted that, as depicted in FIG. 2(b), the measurement diameter in the rolled surface-treated steel sheet was assumed to be ϕ60 mm (measurement area 28.26 cm²). A rectifier (Compact DC Stabilized Power Supply PMX18-5A manufactured by KIKUSUI ELECTRONICS CORPORATION) was used to control the current on the hydrogen entry side, and an ammeter (Digital Multimeter DT4282 manufactured by HIOKI E.E. CORPORATION) was used to measure the current on the hydrogen detection side.

As specific measurement conditions, 2.25 A was applied to the sample on the hydrogen generation side for 30 minutes, hydrogen was generated on the sample surface, and a change in the oxidation current generated when hydrogen atoms permeated the rolled surface-treated steel sheet on the hydrogen detection side was measured every 10 seconds. It should be noted that no current was applied on the hydrogen detection side. In addition, before the current application on the hydrogen generation side, the surface of the rolled surface-treated steel sheet was immersed and held in the electrolytic solution for at least 20 minutes to stabilize the surface, and it was confirmed that the current value of the ammeter on the hydrogen detection side was stable at 10 µA or less.

The hydrogen permeation current density I (µA/cm²) was calculated by the change in oxidation current on the hydrogen detection side obtained by the above method. Specifically, the value obtained by dividing the difference between the oxidation current at 30 minutes after the current application and the current value immediately before the current application (0 second) by a measurement area of 28.26 cm² was used as the hydrogen permeation current density. The results are depicted in Table 4.

The hydrogen barrier property was evaluated as follows, and it was determined that determination C or higher was suitable for practical use.
A: Hydrogen permeation current density was less than 1.0 µA/cm²
B: Hydrogen permeation current density was 1.0 µA/cm² or more but less than 2.5 µA/cm²
C: Hydrogen permeation current density was 2.5 µA/cm² or more but less than 10 µA/cm²
D: Hydrogen permeation current density was 10 pA/cm² or more but less than 30 µA/cm²
E: Hydrogen permeation current density was 30 µA/cm² or more

### [XRD measurement]

XRD measurement was conducted in order to evaluate the state of the alloy composed of iron and nickel contained in the rolled surface-treated steel sheet. As the X-ray diffraction measurement apparatus, SmartLab manufactured by Rigaku Corporation was used. The sample was used by being cut into 20 mm × 20 mm. As specific measurement conditions for X-ray diffraction, the following specifications were used. The crystal orientation index of the (200) plane of Fe₁Ni₁ in the X-ray diffraction, the crystal orientation index of the (220) plane of Fe₁Ni₁ in the X-ray diffraction, and the crystal orientation index of the (111) plane of Fe₁Ni₁ in the X-ray diffraction were calculated, and the difference in crystal orientation index between the (200) plane and the (220) plane was obtained. The results are described in Table 5.

### <Device configuration>

- X-ray source: CuKα
- Goniometer radius: 300 nm
- Optical system: concentration method
   (Incident-side slit system)
- Solar slit: 5°
- Longitudinal limiting slit: 5 mm
- Divergence slit: 2/3°
   (Light reception-side slit system)
- Scattering slit: 2/3°
- Solar slit: 5°
- Light reception slit: 0.3 mm
- Monochromatization method: counter monochromator method
- Detector: scintillation counter

### <Measurement parameter>

- Target: Cu
- Tube voltage-tube current: 45 kVKv-200 mA
- Scanning axis: 2θ/θ (concentration method)
- scanning mode: continuous
- Measurement range: 2θ, 40° to 100°
- Scanning speed: 10°/min
- Step: 0.02°

### [Method of obtaining average grain size according to measurement data of EBSD]

The obtained rolled surface-treated steel sheet was subjected to crystal orientation analysis by EBSD measurement using a SEM to determine the nickel grain size. Specifically, the average crystal grain size was obtained by obtaining and analyzing information concerning a diffraction pattern called the Kikuchi pattern under the following conditions. Specifically, the numerical value calculated as AverageNumber (Diameter) was obtained as the average crystal grain size. It should be noted that at the time of measurement, the diffraction pattern of nickel is specified, but since information can be obtained by the same diffraction pattern from an iron-nickel alloy having a face-centered cubic crystal structure close to that of nickel, the average crystal grain size of nickel according to the EBSD measurement data in the present invention is the average crystal grain size of crystals of nickel, crystals of the iron-nickel alloy, or crystals of nickel and crystals of the iron-nickel alloy. The obtained average crystal grain sizes are depicted in Table 6.

### <EBSD measurement conditions and analysis conditions>

- SEM: SU8020 manufactured by Hitachi High-Tech Corporation
- Measurement program: OIMDataCollection
- Data analysis program: OIMAnalysis(Ver. 6.2.0)
- Measurement range: 100 µm × 120 µm
- Grain Tolerance Angle: 5°
- Step width: 0.20 µm
- AverageNumber (Diameter)

### <Example 1>

First, cold rolled foil (thickness of 55 µm) of low carbon aluminum-killed steel having the following chemical compositions was prepared as a base material.

C: 0.04 wt%, Mn: 0.32 wt%, Si: 0.01 wt%, P: 0.012 wt%, S: 0.014 wt%, and residual portion: Fe and inevitable impurities

Next, the prepared base material was subjected to electrolytic degreasing and pickling by immersion in sulfuric acid, and then nickel plating was performed on both sides of the steel foil under the following conditions to form nickel plating layers each having a thickness of 0.5 µm on both sides. It should be noted that the nickel plating conditions were as follows.

### (Nickel plating conditions)

Bath composition:
Nickel sulfate hexahydrate: 250 g/L
Nickel chloride hexahydrate: 45 g/L
Boric acid: 30 g/L
Bath temperature: 60°C
pH: 4.0 to 5.0
Stirring: air stirring or jet stream stirring
Current density: 10 A/dm²

Next, the steel foil having the nickel plating layer formed as described above was subjected to heat treatment by box annealing under the conditions of a soaking temperature of 560°C, a soaking time of 6 hours, and a reducing atmosphere (heat treatment step). By this heat treatment, a nickel plating surface-treated steel sheet having the iron-nickel alloy layers on both sides was obtained. Then, the nickel plating surface-treated steel sheet was rolled (rolling step). The rolling condition was cold rolling at a rolling reduction of 11%. It should be noted that, as the rolling reduction, the calculated value in the case where the thickness (base material thickness and the thickness of nickel plating layer on both sides) of the nickel plating steel sheet before being rolled was 50 µm by rolling was used. For the rolled surface-treated steel sheet (nickel plating surface-treated steel sheet after the rolling step) thus obtained, evaluation of cracking (hardness and Fe exposure after elongation application by tension), evaluation of the sheet passing property (friction coefficient), evaluation of the hydrogen barrier property, X-ray diffraction measurement, and calculation of the average grain size were performed.

### <Example 2>

The process was carried out in the same manner as that in Example 1 except that each of the thicknesses of the nickel plating layers provided on both sides by nickel plating was set to 1.0 µm and the rolling reduction in the rolling step was set to 12%.

### <Example 3>

The process was carried out in the same manner as that in Example 1 except that the soaking temperature in the heat treatment step was set to 590°C.

### <Example 4>

The process was carried out in the same manner as that in Example 2 except that each of the thicknesses of the nickel plating layers provided on both sides by nickel plating was set to 1.0 µm, the soaking temperature in the heat treatment step was set to 590°C, and the rolling reduction in the rolling step was set to 12%.

### <Example 5>

The process was carried out in the same manner as that in Example 3 except that the thickness of the base material was set to 60 µm, the soaking temperature in the heat treatment step was set to 590°C, and the rolling reduction in the rolling step was set to 18%.

### <Example 6>

The process was carried out in the same manner as that in Example 5 except that each of the thicknesses of the nickel plating layers provided on both sides by nickel plating was set to 0.4 µm, the soaking temperature in the heat treatment step was set to 560°C, and the rolling reduction in the rolling step was set to 18%.

### <Example 7>

The process was carried out in the same manner as that in Example 6 except that each of the thicknesses of the nickel plating layers provided on both sides by nickel plating was set to 0.2 µm.

### <Example 8>

The process was carried out in the same manner as that in Example 6 except that each of the thicknesses of the nickel plating layers provided on both sides by nickel plating was set to 0.18 µm.

### <Example 9>

The process was carried out in the same manner as that in Example 5 except that each of the thicknesses of the nickel plating layers provided on both sides by nickel plating was set to 0.2 µm.

### <Example 10>

The process was carried out in the same manner as that in Example 6 except that each of the thicknesses of the nickel plating layers provided on both sides by nickel plating was set to 0.1 µm.

### <Example 11>

After the rolling step, strike nickel plating treatment and second nickel plating treatment were further performed to form a nickel layer on the iron-nickel alloy layer. Other processes were carried out in the same manner as that in Example 8. The second nickel plating treatment was carried out under the same plating conditions as those when the nickel plating treatment was carried out on the base material. The thickness of the nickel layer on the iron-nickel alloy layer after the second nickel plating treatment was 0.5 µm. Each evaluation was carried out using the rolled surface-treated steel sheet obtained after the nickel layer formation.

### <Comparative example 1>

The thickness of the base material was set to 50 µm, and each of the thicknesses of the nickel plating layers provided on both sides by nickel plating was set to 0.35 µm, and the heat treatment and the rolling were not carried out.

### <Comparative example 2>

The thickness of the base material was set to 200 µm, and each of the thicknesses of the nickel plating layers provided on both sides by nickel plating was set to 0.4 µm for one side and 1.0 µm for the other side. In addition, in the heat treatment step, the heat treatment temperature was set to 800°C, continuous annealing was carried out for one minute of the heat treatment time, and the rolling was not carried out. Other processes were carried out in the same manner as that in Example 1.

### <Comparative example 3>

The thickness of the base material was set to 200 µm, and each of the thicknesses of the nickel plating layers provided on both sides by nickel plating was set to 3.0 µm for one side and 1.0 µm for the other side. In addition, in the heat treatment step, the heat treatment temperature was set to 800°C, continuous annealing was carried out for one minute of the heat treatment time, and the rolling was not carried out. Other processes were carried out in the same manner as that in Example 1.

### <Comparative example 4>

The thickness of the base material was set to 200 µm, and each of the thicknesses of the nickel plating layers provided on both sides by nickel plating was set to 5.0 µm. In addition, the heat treatment temperature in the heat treatment step was set to 670°C, and the continuous heat treatment was carried out for 40 seconds. The rolling reduction in the rolling step was set to 65% to 75% at the first rolling reduction after the nickel plating step. Other processes were carried out in the same manner as that in Example 1.

### <Comparative example 5>

The process was carried out in the same manner as that in Comparative example 4 except that the rolling was carried out at a rolling reduction of 65% to 75%, heat treatment was then carried out by box annealing at 590° for 6 hours, and then cold rolling was carried out at a rolling reduction of 15% to 20%.

Hereinafter, the thickness of the base material, the conditions in each step, and the like are depicted in Table 1. In addition, the measured values and evaluation results are depicted in Table 2 and subsequent tables.

**[Table 1]**

| | Base material thickness (µm) | Ni plating thickness (µm) | Heat treatment step | | Rolling reduction (%) |
|---|---|---|---|---|---|
| | | One side/other side | Temperature (°C) | Time | |
| Example 1 | 55 | 0.5/0.5 | 560 | 6 hours | 11 |
| Example 2 | 55 | 1.0/1.0 | 560 | 6 hours | 12 |
| Example 3 | 55 | 0.5/0.5 | 590 | 6 hours | 11 |
| Example 4 | 55 | 1.0/1.0 | 590 | 6 hours | 12 |
| Example 5 | 60 | 0.5/0.5 | 590 | 6 hours | 18 |
| Example 6 | 60 | 0.4/0.4 | 560 | 6 hours | 18 |
| Example 7 | 60 | 0.2/0.2 | 560 | 6 hours | 17 |
| Example 8 | 60 | 0.18/0.18 | 560 | 6 hours | 17 |
| Example 9 | 60 | 0.2/0.2 | 590 | 6 hours | 17 |
| Example 10 | 60 | 0.1/0.1 | 560 | 6 hours | 17 |
| Example 11 | 60 | 0.18/0.18 | 560 | 6 hours | 17 |
| Comparative example 1 | 50 | 0.35/0.35 | - | - | - |
| Comparative example 2 | 200 | 0.4/1.0 | 800 | 1 minute | - |
| Comparative example 3 | 200 | 3.0/1.0 | 800 | 1 minute | - |
| Comparative example 4 | 200 | 5.0/5.0 | 670 | 40 seconds | 70 |
| Comparative example 5 | 200 | 5.0/5.0 | 670 | 40 seconds | 70 |

**[Table 2]**

| | Vickers hardness (Hv) | | Fe exposure after application of elongation of 3% | |
|---|---|---|---|---|
| | Load 10g | Load 50g | Number of confirmed/measured | Count number ratio |
| Example 1 | 172 | 165 | 0 points/10 points | 0~2 |
| Example 2 | 195 | 172 | 0 points/10 points | 0~2 |
| Example 3 | 183 | 176 | 0 points/10 points | 0~2 |
| Example 4 | 199 | 186 | 0 points/10 points | 0~2 |
| Example 5 | 199 | 179 | 0 points/10 points | 0~2 |
| Example 6 | 175 | 158 | 0 points/10 points | 0~2 |
| Example 7 | 136 | 154 | 0 points/10 points | 0~2 |
| Example 8 | 144 | 154 | 0 points/10 points | 0~2 |
| Example 9 | 175 | 156 | 0 points/10 points | 0~2 |
| Example 10 | 164 | 151 | 0 points/10 points | 0~2 |
| Example 11 | 139 | 159 | 0 points/10 points | 0~2 |
| Comparative example 1 | 191 | 158 | 9 points/10 points | 60 |
| Comparative example 2 | 113 | 101 | 0 points/10 points | 0~2 |
| Comparative example 3 | 152 | 135 | 0 points/10 points | 0~2 |
| Comparative example 4 | 245 | 235 | (Torn at less than 3%) | 122* |
| Comparative example 5 | 171 | 139 | 4 points/10 points | 10 |

| | | | | |
|---|---|---|---|---|
| * Value after application of elongation of 1% | | | | |

**[Table 3]**

| | Friction coefficient | |
|---|---|---|
| | (i) Fourth round | (ii) Sum |
| Example 1 | 0.16 | 1.76 |
| Example 5 | 0.18 | 1.71 |
| Example 6 | 0.15 | 1.63 |
| Example 8 | 0.19 | 1.83 |
| Example 9 | 0.20 | 1.89 |
| Example 10 | 0.19 | 1.81 |
| Example 11 | 0.24 | 3.08 |
| Comparative example 1 | 0.52 | 4.58 |
| Comparative example 2 | 0.67 | 7.96 |
| Comparative example 3 | 1.04 | 10.6 |
| Comparative example 5 | 0.73 | 5.78 |

**[Table 4]**

| | Hydrogen barrier property | |
|---|---|---|
| | Hydrogen permeation current density (µA/cm²) | Evaluation |
| Example 1 | 1.16 | B |
| Example 2 | 0.91 | A |
| Example 3 | 0.92 | A |
| Example 4 | 0.67 | A |
| Example 5 | 1.21 | B |
| Example 6 | 1.01 | B |
| Example 7 | 1.87 | B |
| Example 8 | 2.30 | B |
| Example 9 | 2.00 | B |
| Example 10 | 9.50 | C |
| Example 11 | 2.20 | B |
| Comparative example 1 | 49.19 | E |
| Comparative example 2 | 1.05 | A |
| Comparative example 4 | 29.21 | D |
| Comparative example 5 | 2.50 | C |

**[Table 5]**

| | XRD orientation index | | | |
|---|---|---|---|---|
| | FeNi(200) | FeNi(220) | \| (200)-(220) \| | FeNi(111) |
| Example 1 | 1.33 | 1.33 | 0.00 | 0.85 |
| Example 5 | 1.34 | 1.42 | 0.08 | 0.82 |
| Example 6 | 1.37 | 1.29 | 0.08 | 0.85 |
| Example 8 | 1.36 | 1.95 | 0.59 | 0.62 |
| Example 9 | 1.10 | 1.88 | 0.78 | 0.80 |
| Example 10 | 1.22 | 1.62 | 0.40 | 0.80 |
| Example 11 | 1.20 | 1.59 | 0.39 | 0.78 |
| Comparative example 1 | Without FeNi | Without FeNi | - | Without FeNi |
| Comparative example 2 | 1.11 | 0.38 | 0.73 | 1.18 |
| Comparative example 3 | 1.21 | 0.46 | 0.75 | 1.07 |
| Comparative example 4 | 1.27 | 2.73 | 1.46 | 0.27 |
| Comparative example 5 | 1.77 | 3.56 | 1.79 | 0.25 |

**[Table 6]**

| | Average crystal grain size (EBSD) |
|---|---|
| Example 1 | 0.68 |
| Example 2 | 1.03 |
| Example 3 | 0.78 |
| Example 4 | 1.27 |
| Example 5 | 0.75 |
| Example 6 | 1.03 |
| Example 7 | 0.59 |
| Example 8 | 0.45 |
| Example 9 | 0.52 |
| Example 10 | 0.63 |
| Example 11 | 0.45 |
| Comparative example 1 | 0.36 |
| Comparative example 3 | 1.50 |
| Comparative example 5 | 1.50 |

According to the examples and the comparative examples, the rolled surface-treated steel sheet in the present embodiment can be evaluated as follows.

Regarding a cracking property, it can generally be said that hard films such as nickel are easily cracked. Meanwhile, as a result of comparison between Examples 1 to 11 and Comparative example 1, it can be evaluated that the rolled surface-treated steel sheet of the examples has such excellent characteristics that exposure of iron is less likely to occur and the steel sheet is less likely to be cracked even when stress such as tension is applied while the hardness is maintained at the same level as that of the nickel plating steel sheet of Comparative example 1.

In addition, as a result of comparison between Examples 1 to 11 and Comparative examples 2 and 3, it can be evaluated that the rolled surface-treated steel sheet of the examples has such excellent characteristics that exposure of iron is less likely to occur and the steel sheet is less likely to be cracked even when stress such as tension is applied while the hardness is maintained higher than that of the nickel plating steel sheet of the comparative examples.

Further, as a result of comparison between Examples 1 to 11 and Comparative example 4, it can be evaluated that, in Comparative example 4 in which rolling was performed at a high rolling reduction, the sheet was torn before application of elongation of 3% and there were many points where iron was exposed even at the point of 1% elongation, but the rolled surface-treated steel sheet of the examples has such excellent characteristics that exposure of iron is less likely to occur and the steel sheet is less likely to be cracked even when elongation of 3% is applied.

Further, as a result of comparison between Examples 1 to 11 and Comparative example 5, it can be evaluated that, in Comparative example 5 in which, after rolling was performed at a high rolling reduction, the heat treatment and rolling were performed again, the hardness was almost equivalent to that of Comparative example 1 and iron exposure after application of elongation of 3% was also improved, while the rolled surface-treated steel sheet of the examples has excellent characteristics in terms of the cracking property.

As a result of comparison between the examples and the comparative examples regarding the sheet passing property, it was indicated that the rolled surface-treated steel sheet of the examples had a remarkably lower friction coefficient than the nickel plating steel sheet of the comparative examples. Specifically, it was indicated that the friction coefficient in the fourth round was excellent as 0.4 or less, and the sum of the friction coefficients from 0 round to the fifth round was also remarkably low as compared with those of the comparative examples. As a result, it is possible to provide an excellent surface with less scratching attributable to wear, and it is possible to suppress scratching attributable to wear at the time of passing through the rolls. In particular, the rolled surface-treated steel sheet of the examples is excellent in scratch resistance at the time of passing through squeezing rolls, at the time of passing through feed rolls, and at the time of coating when another layer such as an active material is applied to an upper layer.

As a result of comparison between the examples and the comparative examples regarding the hydrogen barrier property, it was indicated that the rolled surface-treated steel sheet of the examples had a hydrogen barrier property equal to or higher than those of the nickel plating steel sheet and the surface-treated steel sheet of the comparative examples.

As a result of comparison between the examples and the comparative examples regarding the orientation index, it is considered that the rolled surface-treated steel sheet of the examples can be a cracking-resistant layer with appropriate hardness maintained by orienting the crystal grains of Fe₁Ni₁ in the iron-nickel alloy layer in a state where both (200) and (220) are appropriately mixed. In addition, it is considered that the hydrogen barrier property is excellent and an increase in the friction coefficient can be suppressed. In contrast, in Comparative example 4 and Comparative example 5, since the rolling step is carried out at a high rolling reduction, (220) is dominantly orientated.

As a result of comparison between the examples and the comparative examples regarding the average crystal grain size, it was confirmed that the rolled surface-treated steel sheet of the examples had a larger fcc crystal grain size of Ni base than that of the nickel plating steel sheet in Comparative example 1. According to the examples of the present invention, it is considered that an increase in the friction coefficient can be suppressed by setting the average crystal grain size to 0.4 µm or more.

In addition, when Comparative example 3 in which heat treatment was performed after nickel plating was compared with Examples 1 to 11, it was confirmed that the crystal grains were coarsened by heat treatment and the average crystal grain size was increased in Comparative example 3. In addition, since the average crystal grain size is large and the crystal grains are soft in Comparative example 3, it can be understood that the friction coefficient becomes high due to shear deformation caused by shear stress during friction. In contrast, in the examples, it is considered that an increase in the friction coefficient can be suppressed by setting the average crystal grain size to 0.4 to 1.1 µm. In addition, it is considered that the hardness of the uppermost surface of the rolled surface-treated steel sheet and the intermediate layer between the base material and the uppermost surface can be set to an appropriate range.

In addition, when Comparative example 5 in which rolling was performed at a high rolling reduction after forming the iron-nickel alloy layer was compared with Examples 1 to 11, it was confirmed that the crystal grains were coarsened and became large by rolling at a high rolling reduction and performance of heat treatment in Comparative example 5. In contrast, in the examples, it is considered that an increase in the friction coefficient can be suppressed by setting the average crystal grain size to 0.4 to 1.1 µm. In addition, it is considered that the hardness of the uppermost surface of the rolled surface-treated steel sheet and the intermediate layer between the base material and the uppermost surface can be set to an appropriate range.

The above-described embodiment and the respective examples can be variously modified without departing from the gist of the present invention. In addition, the rolled surface-treated steel sheet in the above-described embodiment and examples has been described as being mainly used for a current collector for a secondary battery, but the invention is not limited thereto and can suitably be used for a small-size electronic apparatus or the like.

### [Industrial Applicability]

As described above, the rolled surface-treated steel sheet of the present invention can be applied to various kinds of current collectors for batteries, such battery members as battery containers and terminals, and electronics-related apparatuses.

### [Reference Signs List]

1: Rolled surface-treated steel sheet
20: Base material
30: Iron-nickel alloy layer
2: Rolled surface-treated steel sheet
40: Metal layer

## Claims

1. A manufacturing method of a rolled surface-treated steel sheet, comprising:
an iron-nickel alloy layer formation step in which an iron-nickel alloy layer is formed on a steel sheet to be a base material; and
a rolling step in which, after the iron-nickel alloy layer formation step, the steel sheet having the iron-nickel alloy layer is rolled at a rolling reduction of 5% to 25%.

2. The manufacturing method of a rolled surface-treated steel sheet according to claim 1,
wherein the iron-nickel alloy layer formation step includes
a nickel plating step in which a nickel plating layer is formed on the steel sheet to be a base material, and
a heat treatment step in which a nickel plating material obtained in the nickel plating step is subjected to heat treatment to form the iron-nickel alloy layer by diffusion.

3. A rolled surface-treated steel sheet comprising:
a base material made of steel; and
an iron-nickel alloy layer provided on the base material,
wherein the iron-nickel alloy layer contains Fe₁Ni₁, an orientation index of a (200) plane of the Fe₁Ni₁ in X-ray diffraction is 0.7 or more, and the orientation index of a (220) plane of the Fe₁Ni₁ in the X-ray diffraction is 0.7 or more but less than 2.5.

4. The rolled surface-treated steel sheet according to claim 3,
wherein an average crystal grain size of nickel obtained by electron backscatter diffraction measurement on a surface of the rolled surface-treated steel sheet is 0.4 to 1.1 µm.

5. The rolled surface-treated steel sheet according to claim 3,
wherein a difference (absolute value) between the orientation index of the (200) plane of the Fe₁Ni₁ in the X-ray diffraction and the orientation index of the (220) plane of the Fe₁Ni₁ in the X-ray diffraction is 1.0 or less.

6. The rolled surface-treated steel sheet according to claim 3,
wherein the orientation index of a (111) plane of the Fe₁Ni₁ in the X-ray diffraction is 0.3 to 2.0.
